# EUROPÄISCHE PATENTSCHRIFT

(11) **EP 0 632 202 B1**
(45) Veröffentlichungstag und Bekanntmachung des Hinweises auf die Patenterteilung: **08.04.1998**
(21) Anmeldenummer: 94250131.3
(22) Anmeldetag: 18.05.1994
(51) Int. Cl.: F15B 9/09, B25J 9/14

(54) **Verfahren zum Betrieb eines druckmittelbetriebenen Positionier- oder Greif- bzw. Spannwerkzeuges**
Process for the operation of a pressure medium actuated positioner or gripping clamping device
Procédé pour la mise en oeuvre d'un instrument de positionnement ou de préhension ou de serrage actionné par un medium de tension

(30) Priorität: 01.06.1993 DE 4319022
(43) Veröffentlichungstag der Anmeldung: 04.01.1995
(73) Patentinhaber: MANNESMANN Aktiengesellschaft, 40213 Düsseldorf (DE)
(72) Erfinder: Langguth, Volker Dipl.-Ing., D-78112 St. Georgen (DE); Klein, Reinhard Dipl.-Ing., D-78048 Villingen (DE); Bauspiess, Wolfgang Dr., D-78048 Villingen (DE); Goedecke, Wolf-Dieter Prof.Dr., D-78112 St. Georgen (DE)
(74) Vertreter: Presting, Hans-Joachim, Dipl.-Ing.

(56) Entgegenhaltungen:
- DE-A- 2 937 998

## Beschreibung

Die Erfindung betrifft ein Verfahren zum Betrieb eines druckmittelbetriebenen Positionier- oder Greifwerkzeuges sowie ein druckmittelbetriebenes Positionier- oder Greif- bzw. Spannwerkzeug gemäß Oberbegriff der Patentansprüche 1 und 7.

Druckmittelbetriebene Positionier oder Greif- bzw. Spannwerkzeuge sind aus dem Stand der Technik vielfach bekannt. Dabei wird die Position eines Stellorganes ermittelt und positionsabhängig die ventilbetätigte Druckmittelzufuhr zum Stellorgan geregelt. Bei Verfahren sowie Einrichtungen bekannter Art läßt man oftmals das Stellorgan zum Zwecke eines schnellen zeitsparenden Anstellens des Werkzeuges, stoßartig in Endposition fahren, in der dann die restliche kinetische Energie aufgenommen werden muß. Dies führt dabei zu erhöhtem Verschleiß. Bei einem geregelten Anfahren der Zielposition wird ein solcher Stoß in Endposition zwar vermindert, jedoch führt dies zu einer längeren Positionierdauer.

In der DE-A-29 37 998 ist ein Verfahren zur Steuerung des Arbeitsablaufes einer druckmittelbeaufschlagten Arbeitsmaschine sowie druckmittelbeaufschlagte Arbeitsmaschine mit Druckmittelsteuerung offenbart. Bei diesem Steuerungsverfahren wird der Verlauf eines Hubes des Werkzeugträgers der Arbeitsmaschine ganz oder teilweise zu einem oder mehreren Teilen erfaßt und mit einem vorgegebenen Verlauf eines Hubes verglichen. Bei nach Auswertung aus dem Vergleich sich ergebenden Differenzwerten wird das oder die Schaltsignale für die Steuerung des nächsten Hubes verlegt oder verändert. Durch mehrmaliges Wiederholen dieses Abgleiches erfolgt eine Optimierung des Hubverlaufes, mit dem Ergebnis einer beträchtlichen Erhöhung der Leistung der Arbeitsmaschine. Als Meßparameter können wahlweise die Position des Werkzeugträgers und / oder der Druck in der Arbeitskammer des Antriebes sowie daraus abgeleitete Größen wie die Geschwindigkeit des Werkzeugträgers erfaßt bzw. ermittelt werden, um damit die Zeitpunkte für das Schalten der Ventile festzulegen.

Der Erfindung liegt die Aufgabe zugrunde, bei einem Verfahren sowie bei einem Werkzeug der gattungsgemäßen Art eine Mitberücksichtigung der Elastizität der Anlagenelemente in der Zielposition sowie eine Beeinflußbarkeit nach Erreichen der Zielposition insbesondere bei der Schweißzangenbetätigung in Schweißrobotern zu ermöglichen.

Die gestellte Aufgabe ist hinsichtlich eines Verfahrens der gattungsgemäßen Art erfindungsgemäß durch die kennzeichnenden Merkmale des Patentanspruches 1 gelöst. Hinsichtlich eines druckmittelbetriebenen Positionier- oder Greif- bzw. Spannwerkzeuges gemäß Oberbegriff des Patentanspruches 7 ist die gestellte Aufgabe erfindungsgemäß durch das kennzeichnende Merkmal des Patentanspruches 7 gelöst. Weitere vorteilhafte Ausgestaltungen hinsichtlich des Verfahrens sowie hinsichtlich des Werkzeuges sind in den Unteransprüchen angegeben.

Die erfindungsgemäße Lösung hinsichtlich des Verfahrens besteht darin, daß zusätzlich zur positionsabhängig geregelten Druckmittelzufuhr der Druck des Druckmittels in die Regelung der ventilbetätigten Druckmittelzufuhr eingeht. Zu welchem Zeitpunkt bzw. bei welcher Position druckabhängig oder positionsabhängig geregelt wird, ist durch die Zoneneinteilung bestimmt. Die Bezeichnung "positionsabhängig" geregelt bedeutet, daß die Druckmittelzufuhr abhängig von dem vom Weg- bzw. Positionsermittlungssystem ermittelten Positionswert geregelt wird.

Daher wird nach erstmaliger Erfassung des für eine Postionieraufgabe vorgesehenen Stellweges derselbe in verschiedene Zonen eingeteilt. Hier erfolgt bereits eine differenzierte Bewertung des vorgesehenen Stellweges, bei dem dann später zonenabhängig geregelt wird. Dies führt zu einer Zeitoptimierung der Positionieraufgabe.

In weiterer Ausgestaltung ist der Stellweg in mindestens zwei Zonen eingeteilt, wobei sich die erste Zone von einer Startpostition Sₚₒₛ bis zu einer frei wählbaren Toleranzgrenze Tₚₒₛ nahe einer Zielposition Zₚₒₛ und die zweite Zone sich von der Toleranzgrenze Tₚₒₛ bis zur Zielzone Zₚₒₛ erstreckt. Dabei wird dann die Druckmittelzufuhr zum Stellorgan in der ersten Zone weitgehend positionsabhängig und in der zweiten Zone im wesentlichen druckabhängig geregelt. Dies hat zur Folge, daß die erste Zone im wesentlichen zum Durchlaufen eines Schnellganges dient, um die Zielposition möglichst schnell zu erreichen. Kurz vor der Zielposition erfolgt dann nur noch eine druckabhängige Regelung die dabei im übrigen in gebremster Form von statten gehen kann. In weiterer Ausgestaltung der Erfindung ist jedoch diese zweite Zone nochmals in zwei Teilzonen eingeteilt, wobei die Druckmittelzufuhr in der ersten Teilzone im Bereich von Tₚₒₛ weitgehend positionsabhängig und in der zweiten Teilzone bis Zₚₒₛ nur druckabhängig geregelt wird. Die Parameterabspeicherung der Zoneneinteilung, sowie der Positions- und Druckwerte kann bei sich wiederholenden Positionieraufgaben adaptiv erfolgen. In weiterer Ausgestaltung folgt nach Erreichen der Zielposition eine Haltephase, in welcher die Druckmittelzufuhr zeit- und/oder ereignisabhängig geregelt wird. Durch die ausschließlich druckabhängig geregelte Druckmittelzufuhr in der letzten Phase im Bereich der Zielposition wird erreicht, daß der Stoß beim Erreichen der Zielposition drastisch gemindert wird. Bei Elektrodenbetätigungen von Schweißrobotern ergibt sich das Problem, daß die Elektroden samt Halter nach Erreichen der "Kontaktposition" apparativ und geometrisch bedingt nachfedern. Je nach Anlenkung der Schweißzangenelemente registriert die Positionserfassung am Stellorgan dennoch eine Positionsänderung. Dies würde bei herkömmlichen Regelverfahren sowie Einrichtungen dazu führen, daß das Stellorgan weiterhin mit einer Stellgröße beaufschlagt wird. Bei bekannten Verfahren und Einrichtungen würde dies solange erfolgen, bis die einzelnen Elemente mechanisch nicht weiter nachgeben. Ein durch eine solche Vorgehensweise resultierender Verschleiß ist bei der erfindungsgemäßen Lösung hingegen vermieden. Außerdem kann bei bekannten Einrichtungen gerade diese "elastische" Zone technisch nicht genutzt werden, um beispielsweise den Anpreßdruck während des Schweißvorganges zu regeln. Durch die druckabhängige Regelung, insbesondere in der letzten Phase des Positionierweges, kann durch Bewertung des Druckverlaufes eindeutig erkannt werden, an welchem Punkt des Schließvorganges beispielsweise die Elektroden des Schweißroboters am Werkstück kontaktieren. Da das Verfahren adaptiv angelegt ist, wird bei erstmaliger Erfassung beim Durchlaufen der Positionieraufgabe der Stellweg festgelegt und die Zielposition erkannt. Danach kann eine konkrete Unterscheidung zwischen Erreichen der Zielposition, also Auftreffen der Elektroden, und Durchbiegen der einzelnen Halteelemente vorgenommen werden. Dies führt dann im weiteren zu dem Vorteil, daß gerade in dieser Phase nach Auftreffen der Elektroden die elastische Phase erkannt und beispielsweise zur Regelung des Anpressdruckes der Elektroden herangezogen werden kann. Die in weiterer Ausgestaltung bezeichnete Haltephase kann dann zeit- und/oder ereignisabhängig geregelt werden. Vorteilhaft ist hierbei ebenfalls, daß man auf eine hohe Ortsauflösung der Positionsermittlungseinrichtung verzichten kann, und die Positionsermittlungseinrichtung somit einfacher sein kann.

Dies ergibt sich aus folgendem Grund.
Im Bereich des eigentlichen Schnellganges, also des groben Anpositionierens der Endposition kommt es darauf an, daß das Positionsermittlungssystem einen großen Weg erfassen kann. In der zweiten Phase käme es bei einer Positionsermittlungseinrichtung, wie sie bei bekannten Verfahren und Einrichtungen verwendet wird darauf an, daß das Positionsermittlungssystem eine solch hohe Ortsauflösung aufweist, daß die kleinen Ortsänderungen im Bereich nahe der Zielposition oder möglicherweise im Elastizitätsbereich der Anlagenelemente hinreichend genau ist. Wie oben bereits gesagt, müssen die Weg- bzw. Positionsermittlungssysteme daher von großer Güte, und damit aufwendig sein. Bei der vorliegenden Erfindung ergibt sich dagegen der Vorteil, daß das Positionsermittlungssystem im wesentlichen nur für das Durchlaufen des Schnellganges, möglicherweise auch noch für die Suchphase herangezogen wird, und daher keine hohe Ortsauflösung braucht, und daß im Bereich der Zielposition bzw. im Elastizitätsbereiches die weitere Regelung druckabhängig erfolgt. Das heißt das Postionsermittlungssystem kann entsprechend einfach ausgebildet sein, und durch die Zuhilfenahme der druckabhängigen Positionierung ist die Positionierung im elastischen Bereich extrem feinfühlig. Die Anbringung von Druckmeßelementen ist unproblematisch und kann auf einfache Weise durch die Integration in Ventile oder in die entsprechenden Druckleitungen erfolgen.

Hinsichtlich eines druckmittelbetriebenen Positionier- oder Greif- bzw. Spannwerkzeuges gemäß Oberbegriff des Patentanspruches sind erfindungsgemäß Mittel zur Druckerfassung des Druckmittels im Bereich der Druckmittelzufuhr zum Stellorgan vorgesehen. Diese können wahlweise im Druckmittelzuleitungssystem aber auch im arbeitsleitungsseitigen Teil der Ventile angeordnet sein. Hiermit ist also eine differenzierte Regelung in Unterscheidung der beiden Zustände a) Positionsänderung registriert da Zielposition noch nicht erreicht, und
b) Zielposition erreicht, Positionsänderung wegen elastischem Nachgeben der einzelnen Elemente,
gegeben.

Außerdem kann der Auftreffpunkt der Elektroden nach erstmaligen Durchlauf "gelernt" werden, so daß beim nachfolgenden Dauerbetrieb ein fortwährendes "Aufknallen" in der Zielposition ausbleibt. Insgesamt erfolgt die ganze Regelung auch noch zeitoptimiert.

Die Erfindung ist der Zeichnung dargestellt und im Nachfolgenden näher beschrieben.

Es zeigt:
- Figur 1:: Position als Funktion der Zeit zur Darstellung des Verfahrens,
- Figur 2:: schematische Darstellung des Stellorganes sowie der Stellglieder samt Regelung.
- Figur 3:: Struktur des Regelkreises

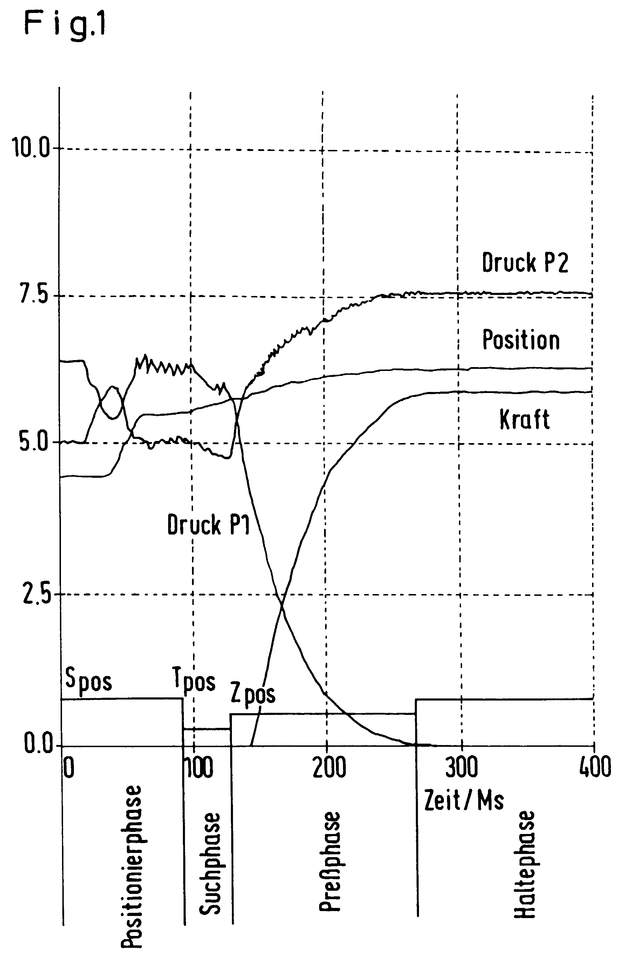

Figur 1 zeigt die Darstellung des erfindungsgemäßen Verfahrens, bei dem die Parameter Druck 1 und Druck 2 in Bezug auf die Position sowie die Kraft aufgetragen sind. Die Abzisse trägt die Zeiteinteilung, wobei diese in diesem Beispiel in vier Phasen bzw. vier Zonen eingeteilt ist.
1. Positionierphase
2. Suchphase
3. Preßphase
4. Haltephase.

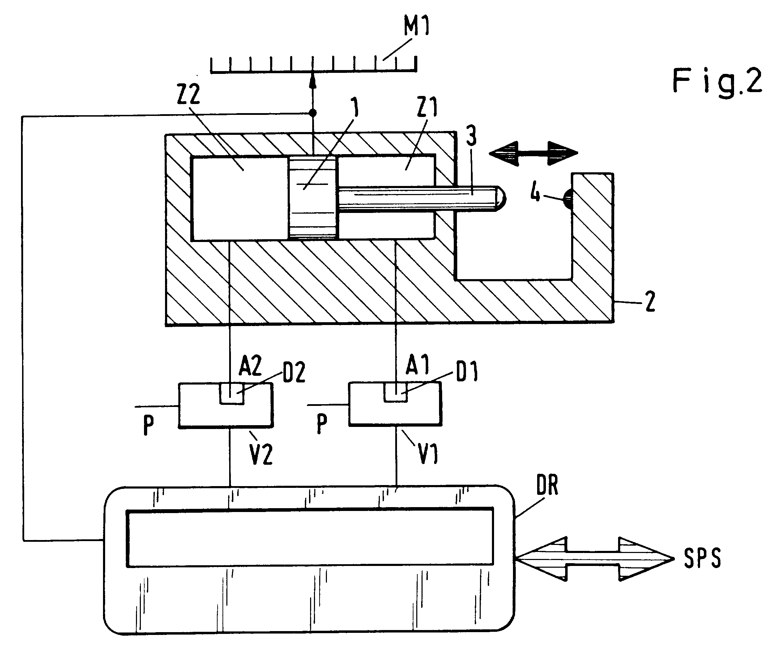

Die Ordinate ist willkürlich auf die entsprechenden Einheiten festgelegt. In der Positionierphase, welche im wesentlichen als Schnellgang bezeichnet wird, wird das druckmittelbetriebene Stellorgan mit Druck beaufschlagt. Hier sei beispielhaft ein nach Figur 2 ausgestalteter Arbeitszylinder herangezogen, wobei der Kolben den Zylinderinnenraum in zwei Druckräume einteilt. Um den Zylinder nun in eine Richtung auszufahren, muß einer der Drücke erhöht und der andere vermindert werden. Daher verlaufen hier die Druckverläufe von Druck 1 und Druck 2 gegenläufig. In der Positionierphase erfolgt hierbei eine Absenkung des Druckniveaus in Zylinderraum Z1, wohingegen der Druck in Zylinderraum 2 zum Ausfahren in eine Richtung entsprechend ansteigt. Die Einteilung in die dort dargestellten vier Zonen erfolgt natürlich nach einem Erstdurchlauf und ist festgelegt für alle folgenden Durchläufe. Ändert sich die Positionieraufgabe oder die Nebenbedingungen, so kann die Zoneneinteilung auch neu festgelegt werden, da das System adaptiv angelegt ist. Erreicht nun das Stellorgan die Grenze der Positionierphase, so geht diese in diesem Beispiel in eine zweite Phase, die sogenannte Suchphase über. In dieser Suchphase wird positionsabhängig und/oder geschwindigkeitsabhängig geregelt, jedoch nur noch mit kleinen Ortsänderungen. Dies läßt sich nun in Gegenüberstellung des in Figur 1 dargestellten Positionsverlaufes erkennen.

In der Positionierphase erfolgt ein starker Anstieg, also eine hohe Änderung der Position, welche zunächst abgebremst und dann in die Suchphase übergeht. Die Abbremsung beim Übergang von Positionierphase in Suchphase ist durch die entsprechende Druckbeaufschlagung auch in den Druckverläufen von Druck P1 und Druck P2 zu erkennen. Hierbei ist beispielsweise zu erkennen, daß der zum Ausfahren des Zylinders in der Positionierphase angesteuerte Druck P2 im Bereich der Suchphase plötzlich abfällt und der zuvor abgesenkte Druck P1 hier zum Bremsen ansteigt. Beim Übergang des Stellorganes von der Suchphase in die Preßphase wird die Zielposition, daß heißt die Kontaktposition erreicht. Hier erfolgt der Übergang der Regelung in die ausschließliche Berücksichtigung des Druckes. Eine Positionsermittlung findet nicht mehr statt. Es wird besonders eindrucksvoll deutlich, daß der Positionsverlauf in der Pressphase nur noch einen kleinen Gradienten, hingegen die Druckverläufe von Druck P1 und Druck P2 große Gradienten aufweisen. Daran wird deutlich, daß durch die entsprechend großen Druckgradienten gegenüber dem relativ kleinen Positonsgradienten eine Berücksichtigung des Druckes wesentlich feinfühliger ist, als eine Positionsermittlung in diesem Bereich. In dieser Preßphase wird dann die Elastizität der Anlagenelemente berücksichtigt. Im Übergang zur Haltephase erkennt man, daß die Druckgradienten von Druck P1 und Druck P2 zu Null werden, und somit der Elastizitätsbereich ausgeschöpft ist. Bei dem Einsatz des Verfahrens bei Elektrodenbetätigung von Schweißrobotern kann in dieser Haltephase auf den Schweißvorgang Einfluß genommen werden. Dieser Schweißvorgang kann in druckgeregelter Weise dann entweder zeit- oder ereignisabhängig geregelt werden. So ist es beispielsweise möglich, entweder die Schweißdauer festzulegen, oder auch die im Schweißvorgang vorhandenen einzelnen Schweißphasen zu beeinflussen. Beim Schweißvorgang treffen zunächst die Elektroden auf das Werkstück.

Bis zum Zündaugenblick und auch noch darüber hinaus bleibt die Elektrode sowie das Werkstück im Aufheiz-Zustand, daß heißt im festen Zustand. Ist der Schmelzpunkt nach kurzer Zeit erreicht, so schmilzt die Elektrode sowie das Werkstück im Kontaktbereich auf, so daß die Elektroden keinen festen Widerhalt mehr haben. Dieser Übergang in die flüssige Phase kann beim vorliegenden erfindungsgemäßen Verfahren wieder durch eine Positionsänderung erkannt werden, sodaß der Anpreßdruck der Elektroden verändert werden kann. Dies führt zu einer erheblichen Qualitätssteigerung der Schweißverbindungen. Mit der Bezeichnung, "...in der Haltephase wird zeit- und/oder ereignisabhängig geregelt..." ist genau eine solche Vorgehensweise gemeint.

Figur 2 zeigt beispielhaft einen Aufbau, in den die Erfindung vorrichtungs- und verfahrensgemäß eingeht. Hierbei ist ein Arbeitszylinder mit einem Kolben 1 und einer Kolbenstange 3 dargestellt, welcher in einem Arbeitszylinder geführt wird, und den dort vorhandenen Zylinderraum beweglich in die Druckräume Z1 und Z2 einteilt. Der Kolben fährt bei Druckbeaufschlagung die Kolbenstange 3 bis zum Anlagepunkt 4 aus. In vereinfachter Form stellt dies eine Elektrodenbetätigung bei Schweißrobotern dar. Zwischen der Spitze der Kolbenstange 3 und dem Kontaktpunkt 4 wären die zu verschweißenden Werkstücke einzubringen. Soll der Kolben nun die Kolbenstange 3 bzw. die Elektrode in die Kontaktposition ausfahren, so wird der Zylinderraum Z2 über die Arbeitsleitung A2 und das Ventil V2 mit Druck beaufschlagt, daß heißt belüftet. Im Schnellgang wird in diesem Augenblick dann der Druckraum 1 mehr oder weniger entlüftet. Am Ende der Positionierphase wird der Kolben 1 abgebremst, indem der Druckraum Z1 nun über das Ventil V1 mit Druck beaufschlagt, daß heißt belüftet wird. Die Kolbenposition wird über ein angedeutetes Positionsermittlungs- bzw. Meßsystem M1 ermittelt.

Beim Übergang von der Suchphase in die spätere Preß- und Haltephase erfolgt dann auch der Übergang der Positionsberücksichtigung über das Positionsermittlungssystem M1 hin zur Druckberücksichtigung über die Drucksensoren D1, D2 in den Ventilen V1 und V2. Bei den Ventilen V1 und V2 handelt es sich um Druckservoventile mit integrierten Drucksensoren. In der genannten Pressphase erfolgt aus den oben genanten Gründen der Elastizität der Anlagenelemente 2 eine kleine Positionsänderung. Diese wird dann in verfahrensgemäßer Weise über die integrierten Drucksensoren überwacht. Die überwachten Druckwerte sowie die Ansteuerung der Servoventile erfolgt über einen Digitalregler DR, welcher in Korrespondenz mit einer SPS steht. In den Digitalregler werden die Druckwerte der Ventile V1 und V2 sowie die Positionswerte aus dem Meßsystem M1 eingespeist. In verfahrensgemäßer Weise werden die entsprechenden Ansteuersignale für die Servoventile ausgegeben. Der Druckmitteleingang der Ventile V1 und V2 ist mit P bezeichnet und die beiden Arbeitsleitungen mit A1 und A2.

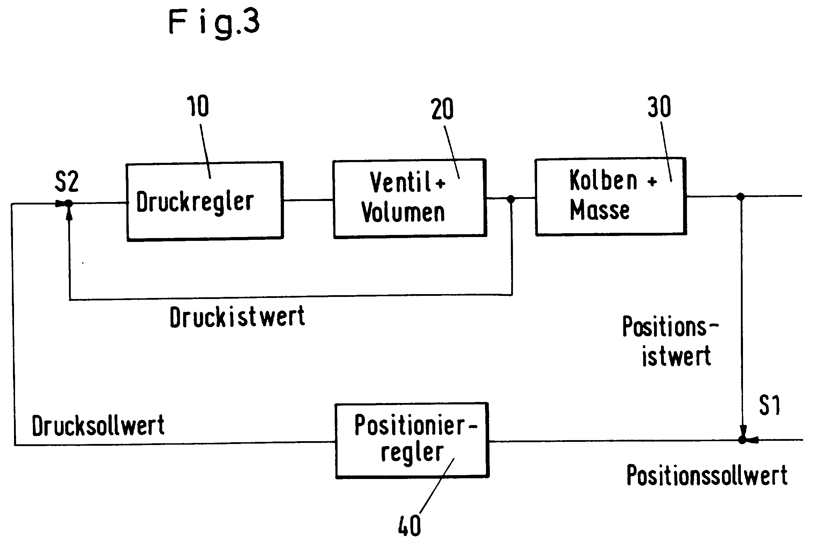

Figur 3 zeigt in einer Übersichtsdarstellung nochmals die Struktur des Regelkreises. Hierbei sind dargestellt der Druckregler 10, repräsentierend für Ventil- und anzusteuerndes Zylindervolumen, eine Blackbox mit der Bezeichnung 20 und eine weitere Blackbox 30 in Berücksichtigung der Kolbenposition und der Masse. Im Positionierregeler 40 kommen alle Werte zusammen. Nach Vorgabe eines Positions-Sollwertes wird der Positions-Istwert an der Summationsstelle S1 dem Positions-Sollwert regelungstechnisch überlagert und geht als Differenz in den Positionierregler 40. Dieser ermittelt einen Druck-Sollwert, welcher an einem zweiten regelungstechnischen Summationspunkt S2 ansteht.

An diesem Summationspunkt S2 wird der Druck-Istwert an den Ventilen regelungstechnisch dem Druck-Sollwert überlagert und das Ergebnis dem Druckregler 10 zugeführt.

In Gesamtschau aller erfindungsgemäß dargestellten Merkmale und deren verfahrensgemäße sowie vorrichtungsgemäße Realisierung führen diese insbesondere bei der Verwendung in Punktschweißanlagen bei Schweißrobotern zu erheblichen Vorteilen. Dazu gehören Minimierung der Öffnungs- und Schließzeiten, Minimierung des Elektrodenverschleißes durch kontrollierten Schließvorgang mit sanftem Aufsetzen der Elektroden, Erhöhung der Schweißqualität über Programmierung der Preßkraft, in oben genannter Weise, Erhöhung der Sicherheiten mittels Überwachung auf Elektrodenbrand und Elektrodenbruch, sowie Senkung der Betriebskosten, da geringer Luftverbrauch durch variable Einstellung des Öffnungshubes möglich ist.

## Patentansprüche

1. Verfahren zum Betrieb eines druckmittelbetriebenen Positionier- oder Greif- bzw. Spannwerkzeuges, bei welchem die Position mindestens eines Stellorganes ermittelt und positionsabhängig die ventilbetätigte Druckmittelzufuhr zum Stellorgan geregelt wird,
dadurch gekennzeichnet,
daß zusätzlich zur positionsabhängig geregelten Druckmittelzufuhr der Druck des Druckmittels in die Regelung der ventilbetätigten Druckmittelzufuhr eingeht und nach erstmaliger Erfassung des für eine Positionieraufgabe vorgesehenen Stellweges derselbe in verschiedene Zonen eingeteilt wird.

2. Verfahren nach Anspruch 1,
dadurch gekennzeichnet,
daß der Stellweg in mindestens zwei Zonen eingeteilt wird, wobei sich die erste Zone als Positionierphase von einer Startposition Sₚₒₛ bis zu einer wählbaren Toleranzgrenze Tₚₒₛ nahe einer Zielposition Zₚₒₛ, und die zweite Zone als Suchphase sich von der Toleranzgrenze Tₚₒₛ bis zur Zielzone Zₚₒₛ erstreckt.

3. Verfahren nach Anspruch 2,
dadurch gekennzeichnet,
daß die Druckmittelzufuhr zum Stellorgan in der ersten Zone weitgehend positionsabhängig und in der zweiten Zone positions- und/oder geschwindigkeitsabhängig geregelt wird.

4. Verfahren nach Anspruch 2,
dadurch gekennzeichnet,
daß der zweiten Zone eine Preßzone folgt, in welcher ausschließlich druckabhängig geregelt wird.

5. Verfahren nach Anspruch 3 oder 4,
dadurch gekennzeichnet,
daß die Parameterabspeicherung der Zoneneinteilung sowie der Positions- und Druckwerte bei sich wiederholenden Positionieraufgaben adaptiv erfolgt.

6. Verfahren nach Anspruch 5,
dadurch gekennzeichnet,
daß nach Erreichen der Zielposition und Durchlaufen der Preßphase eine Haltephase folgt, in welcher die Druckmittelzufuhr zeit- und/oder ereignisabhängig geregelt wird.

7. Druckmittelbetriebenes Positionier- oder Greif- bzw. Spannwerkzeug, insbesondere zur mechanischen Elektrodenbetätigung bei Schweißrobotern, mit mindestens einem ventilgesteuerten druckmittelbetriebenen Stellorgan, sowie mit Mitteln zur Positionserfassung des bzw. der Stellorgane,
dadurch gekennzeichnet,
daß Mittel (D1, D2) zur Druckerfassung des Druckmittels im Bereich der Druckmittelzufuhr zum Stellorgan (1, Z1, Z2) vorgesehen sind und diese aus mindestens einem Drucksensor pro Ventil (V1, V2) bestehen, welche im arbeitsseitigen Teil (A1, A2) des bzw. der Ventile (V1, V2) angeordnet ist bzw. angeordnet sind, wobei die Drucksensoren sowie das Positionierermittlungssystem (M1) zur Übermittlung der Meßwerte mit einem Digitalregler (DR) verschaltet sind.

8. Druckmittelbetriebenes Positionier- oder Greif- bzw. Spannwerkzeug nach Anspruch 7,
dadurch gekennzeichnet,
daß der Digitalregler (DR) mit einer Speicherprogrammierbaren Steuerung (SPS) verbunden ist.

9. Druckmittel betriebenes Positionier- oder Greif- bzw. Spannwerkzeug nach Anspruch 8,
dadurch gekennzeichnet,
daß die Ventile (V1, V2) über den Digitalregler (DR) ansteuerbar sind.

## Claims

1. Process for the operation of a pressure medium-operated positioning or gripping and clamping tool, in which the position of at least one actuator is detected and the valve-actuated pressure medium supply to the actuator is regulated in a position-dependent manner, characterised in that the pressure of the pressure medium is included in the regulation of the valve-actuated pressure medium supply in addition to the pressure medium supply which is regulated in a position-dependent manner and, after the actuating travel designated for the positioning task has been determined for the first time, this travel is divided into different zones.

2. Process according to claim 1, characterised in that the actuating travel is divided into at least two zones, the first zone extending as the positioning phase from a start position Sₚₒₛ to a selectable tolerance limit Tₚₒₛ near a target position Zₚₒₛ, and the second zone extending as the search phase from the tolerance limit Tₚₒₛ to the target zone Zₚₒₛ.

3. Process according to claim 2, characterised in that the pressure medium supply to the actuator is regulated largely in a position-dependent manner in the first zone and in a position- and/or speed-dependent manner in the second zone.

4. Process according to claim 2, characterised in that the second zone is followed by a pressing zone, in which regulation is solely pressure-dependent.

5. Process according to claim 3 or 4, characterised in that the storage of the parameters for the zone division and for the position and pressure values is effected on an adaptive basis for repetitive positioning tasks.

6. Process according to claim 5, characterised in that, after the target position has been reached and the pressing phase passed through, there follows a holding phase in which the pressure medium supply is regulated in a time-and/or event-dependent manner.

7. Pressure medium-operated positioning or gripping and clamping tool, in particular for mechanical electrode actuation in welding robots, with at least one valve-controlled, pressure medium-operated actuator, and with means for detecting the position of the actuator(s), characterised in that means (D1, D2) are provided for detecting the pressure of the pressure medium in the region of the pressure medium supply to the actuator (1, Z1, Z2), and these means consist of at least one pressure sensor per valve (V1, V2), which is/are disposed in the part (Al, A2) of the valve(s) (V1, V2) on the working side, the pressure sensors and the position detection system (M1) being connected to a digital controller (DR) to transmit the measured values.

8. Pressure medium-operated positioning or gripping and clamping tool according to claim 7, characterised in that the digital controller (DR) is connected to a programmable logic control unit (SPS).

9. Pressure medium-operated positioning or gripping and clamping tool according to claim 8, characterised in that the valves (V1, V2) can be controlled via the digital controller (DR).

## Revendications

1. Procédé destiné au fonctionnement d'un outil de positionnement ou de préhension ou de serrage, selon lequel la position d'au moins un organe de réglage est déterminée, et selon lequel l'amenée du fluide sous pression commandée par soupape à l'organe de réglage est réglée en fonction de la position,
caractérisé en ce que,
en plus de l'amenée du fluide sous pression réglée en fonction de la position, la pression du fluide sous pression est également prise en compte dans le réglage de l'amenée du fluide sous pression actionné par soupape, et en ce que, après une détection initiale de la course de réglage prévue pour une fonction de positionnement, celle-ci est subdivisée en différentes zones.

2. Procédé selon la revendication 1,
caractérisé en ce que
la course de réglage est subdivisée en deux zones au moins, la première zone s'étendant en tant que phase de positionnement d'une position de départ Spos jusqu'à une limite de tolérance Tpos pouvant être choisie, qui est proche d'une position de destination Zpos, alors que la deuxième zone s'étend en tant que phase de recherche de la limite de tolérance Tpos jusqu'à la zone de destination Zpos.

3. Procédé selon la revendication 2,
caractérisé en ce que,
dans la première zone, l'amenée du fluide sous pression à l'organe de réglage est dans une large mesure réglée en fonction de la position, et en ce que dans la deuxième zone, elle est réglée en fonction de la position et/ou de la vitesse.

4. Procédé selon la revendication 2,
caractérisé en ce que
la deuxième zone est suivie d'une zone de compression, dans laquelle le réglage est effectué exclusivement en fonction de la pression.

5. Procédé selon la revendication 3 ou 4,
caractérisé en ce que
la mémorisation des paramètres de la répartition en zones, ainsi que des valeurs de position et de pression, est effectuée de façon adaptative lors de fonctions de positionnement répétitives.

6. Procédé selon la revendication 5,
caractérisé en ce que
une phase de maintien a lieu après que la position de destination a été atteinte et la phase de compression passée, dans laquelle l'amenée du fluide sous pression est réglée en fonction du temps et/ou d'événements.

7. Outil de positionnement ou de préhension ou de serrage actionné par un fluide sous pression, destiné notamment à l'actionnement mécanique d'électrodes de robots de soudage, comportant au moins un organe de réglage actionné par un fluide sous pression et commandé par soupape, ainsi que des moyens de détection de la position du ou des organe(s) de réglage,
caractérisé en ce que
des moyens (D1,D2) sont prévus pour détecter la pression du fluide sous pression dans la zone d'amenée du fluide sous pression à l'organe de réglage (1, Z1, Z2), et en ce que ceux-ci sont constitués d'au moins un détecteur de pression par soupape (V1, V2) qui est ou sont disposé(s) dans la partie de travail (A1, A2) de ou des soupape(s) (V1, V2), les détecteurs de pression, ainsi que le système de détermination de position (M1), étant reliés à un régulateur numérique (DR).

8. Outil de positionnement ou de préhension ou de serrage actionné par un fluide sous pression selon la revendication 7,
caractérisé en ce que le régulateur numérique (DR) est relié à une commande (SPS) à mémoire programmable.

9. Outil de positionnement ou de préhension ou de serrage actionné par un fluide sous pression selon la revendication 8,
caractérisé en ce que
les soupapes (V1, V2) peuvent être commandés par l'intermédiaire du régulateur numérique (DR).
